# EUROPÄISCHE PATENTSCHRIFT

(11) **EP 1 704 290 B1**
(45) Veröffentlichungstag und Bekanntmachung des Hinweises auf die Patenterteilung: **23.05.2012**
(21) Anmeldenummer: 04819258.7
(22) Anmeldetag: 25.11.2004
(51) Int. Cl.: E04F 13/08, E04F 15/02, B29C 45/14

(54) **PLATTE ZUR VERWENDUNG IN EINEM VERLEGESYSTEM; INSBESONDERE ZUR HERSTELLUNG EINES BODENBELAGS SOWIE VERFAHREN ZUR HERSTELLUNG DERSELBEN**
TILE TO BE USED IN A LAYING SYSTEM, ESPECIALLY FOR PRODUCING A FLOOR COVERING AND METHOD FOR PRODUCING THE SAME
PLAQUE DESTINEE A ETRE UTILISEE DANS UN SYSTEME DE POSE, EN PARTICULIER POUR PRODUIRE UN REVETEMENT POUR LE SOL ET PROCEDE POUR LA PRODUIRE

(30) Priorität: 26.11.2003 DE 10355788
(43) Veröffentlichungstag der Anmeldung: 27.09.2006
(73) Patentinhaber: NFS New Flooring Systems AG, 3005 Bern (CH)
(72) Erfinder: DELLA PEPA, Tomas, 67177 Limburgerhof (DE)
(74) Vertreter: Frei Patent Attorneys
(86) Internationale Anmeldenummer: PCT/EP2004/053107
(87) Internationale Veröffentlichungsnummer: WO 2005/052279

(56) Entgegenhaltungen:
- EP-A- 1 020 589
- WO-A-02/077389
- WO-A-03/040491
- CH-A- 446 680
- DE-A1- 2 508 628
- DE-A1- 10 253 553
- DE-U1- 20 107 338
- US-B1- 6 343 451

## Beschreibung

### Technisches Gebiet

Die Erfindung betrifft eine Verbundplatte zur Verwendung in einem Verlegesystem, insbesondere zur Herstellung eines Bodenbelags sowie ein Verfahren zur Herstellung dieser Platte, ein Verlegesystem, einen Bodenbelag und ein Gebäude mit diesem Bodenbelag.

Mit Hilfe derartiger Platten ist es möglich, einen Bodenbelag zu erstellen, indem mehrere Platten aneinander gesetzt werden.

### Stand der Technik

Aus der WO 03 040491 A1 ist ein Verlegesystem für Platten bekannt, bei dem die Platten mit einem Auflagerahmen versehen sind, wobei die Platten zumindest teilflächig auf dem Auflagerahmen aufliegen. Die Rahmen sind auf der Unterseite der Platte durch Kleben befestigt und verfügen über eine Rastverbindung und eine Dichtung an den Seitenkanten.

Aus der WO 02 077389 A1 ist ein Fußboden aus einzelnen Elementen bekannt, wobei die flächenhaften Elemente mehrschichtige Platten sind, die beispielsweise ein Naturstein und eine durch eine Klebeverbindung befestigte, druckfeste Leichtstoffschicht umfassen. An senkrechten Randflächen der Leichtstoffschicht sind Nuten angeordnet, in welche Verbindungsleisten einlegbar sind, so dass eine Verbindung mit benachbarten Platten herstellbar ist. Die Verbindungleiste kann mit einer Kantenleiste versehen sein, welche die Abdichtung zwischen den Platten verbessert. Darüber hinaus kann eine flächige Bewehrung geringer Dicke vorgesehen sein, um die Festigkeit der Platte zu verbessern.

Aus der DE 102 53 553 A1 ist ein schwimmend verlegbares Fußbodenelement bekannt, bei dem eine Sichtlage mit einer Trägerlage durch einen Klebstoff verbunden wird. Der Klebstoff ist in Klebepunkten angebracht, die untereinander über Gitterstege zu einer rahmenförmigen Gittermatte verbunden sind.

Aus der DE 25 08 628 A1 ist ein Fußbodenelement bekannt, welches eine Holzspanplatte umfasst, auf welcher ein beliebiger Bodenbelag zum Beispiel durch Aufkleben aufgebracht werden kann. Dazu sind auf Stegen eine Reihe von Verleimungspunkten vorgesehen.

Aus der DE CH 446 680 A ist eine Vorrichtung bekannt, mit welcher Platten zueinander befestigt werden können. Die Platten bestehen aus zwei Lagen und sind miteinander im Bereich einer Auflagefläche verklebt.

Aus der US 6 343 451 B1 ist eine Verbundplatte bekannt, welche eine Decklage aus Stein und eine durch Anspritzen entstandenen Unterlage aufweist.

Aus der EP 1 020 589 A2 ist ein Belagelement und ein Verfahren zu dessen Herstellung bekannt, wobei das Belagelement aus einer Fliese und eine an der Unterseite angeordneten Trägerschicht besteht. Die Trägerschicht ist mit der Unterseite verbunden, wobei die Trägerschicht an die Fliese angespritzt sein kann.

Aus der DE 201 07 338 U1 ist ein Bodenbelagsträgersystem bekannt, bei der eine Keramikfliese auf einer Trägerschicht mittels Hinterschäumung mit einem Poliurethan-Hartschaum befestigt ist.

Ausgehend von diesem Stand der Technik stellt sich das Problem, die Verbindung der Platte einerseits mit dem Träger andererseits zuverlässig und wirtschaftlich herzustellen.

### Darstellung der Erfindung

Gemäß der Erfindung wird eine Verbundplatte zur Verwendung in einem Verlegesystem, insbesondere zur Herstellung eines Bodenbelags vorgeschlagen, welche einen an der Verlegeseite angeordneten Träger aufweist, wobei der Träger Anlageflächen an die Verlegeseite der Platte aufweist und weiterhin teilflächige Bereiche, die zu Verlegeseite der Platte hin beabstandet sind.

Bei diesen teilflächigen Bereichen kann es sich um Vorsprünge, Verbindungsstege, Bewehrungen oder Gitter handeln, die an dem Träger angeformt sind oder in diesen eingelegt sind oder sonst wie an dem Träger befestigt sind.

Aufgrund des Abstands ist es möglich, einen Klebstoff in diesem Bereich einzubringen.

Dabei kann an der Anlagefläche selbst bereits eine Klebeverbindung mit der Platte hergestellt worden sein, etwa um den Träger in seiner zur Platte hin ausgerichteten Lage zu halten. Die eigentliche Befestigung erfolgt dann über die teilflächigen Bereiche.

Der Zwischenraum zwischen den teilflächigen Bereichen und der Verlegeseite der Platte ist mit einem Füllmittel ausgefüllt. Das Füllmittel ist dabei so ausgebildet, dass eine Verbindung des teilflächigen Bereichs zur Verlegeseite der Platte hin hergestellt ist. Die Verbindung zur Verlegeseite der Platte hin erfolgt dabei vorteilhafterweise durch Haftung, insbesondere durch Adhäsion (Kleben).

Die teilflächigen Bereiche sind in das Füllmittel eingebettet. Dies erfolgt derart, dass die Auflageflächen nach wie vor über die Bereich hervorstehen oder zumindest bündig abschließen, jedenfalls nicht überragt werden.

Vorteilhafterweise weist der Träger Auflageflächen auf, die über die Bereiche hervorstehen. Die teilflächigen Bereiche sind damit einerseits zur Verlegeseite der Platte hin beabstandet, und andererseits zu der Oberfläche, auf welche die mit dem Träger versehene Platte aufgelegt werden soll.

Aufgrund der Einbettung der teilflächigen Bereiche einerseits sowie der die Anlagefläche und die Auflagefläche tragenden Bereiche des Trägers andererseits wird durch diese Verbindung des Trägers mit der Verlegeseite der Platte eine Festigkeit erreicht, welche hohen Belastungen standhält. Die Erzeugung der Verbindung erfolgt dabei im wesentlichen drucklos, indem das Füllmittel von der Verlegeseite her in den aufgelegten Träger eingebracht wird und sich dort verteilt.

Vorteilhafterweise sind die Auflageflächen mit einer Dämpfungsauflage für Trittschall versehen. Dabei kann es ausreichend sein, nur Teilbereiche mit einer entsprechenden Auflage zu versehen.

Unter bestimmten Umständen kann es erforderlich sein, zwischen dem Füllmittel und der Verlegeseite der Platte einen Haftvermittler vorzusehen, um eine entsprechende Festigkeit der Verbindung zu erreichen.

Gemäß einer vorteilhaften Weiterbildung ist der Träger als Gitter ausgebildet, wobei an den Kreuzungspunkten die Anlageflächen und die Auflageflächen ausgebildet sind und die Gitterlinien die teilflächigen Bereiche darstellen.

Als Füllmittel eignet sich insbesondere ein Polymer wie Kunstharz oder PU-Schaum.

Gemäß einer Weiterbildung der Erfindung kann der Träger zumindest teilweise über die Platte hervorstehende Verbindungsmittel einerseits und zumindest teilweise unter der Platte angeordnete Verbindungsmittel andererseits aufweisen. Dank dieser Verbindungsmittel ist es möglich, zwei benachbarte Verbundplatten miteinander zu verbinden, wobei der Vorsprung einer Platte in den Rücksprung der anderen Platte eingreift. Derartige Verbindungen sind aus dem Stand der Technik bekannt.

Gemäß einer Weiterbildung springt der Träger an mindestens einer Seitenkante der Platte vor, wobei dieser Vorsprung mit einer Dichtung versehen ist. Hierdurch ist es möglich, die Trennfuge zwischen zwei benachbarten Platten abzudichten.

Vorteilhafterweise ist die Dichtung in einem formgebenden Verfahren mit dem Träger verbunden.

Ein erfindungsgemäßes Verfahren zur Herstellung einer Verbundplatte besteht darin, dass ein Träger über Anlageflächen zur Platte ausgerichtet wird und dass Füllmittel zwischen die Anlageflächen des Trägers und die Platte eingebracht wird, wobei sich das Füllmittel mit der Platte einerseits und mit teilflächigen Bereichen des Trägers andererseits verbindet.

Ein Vorteil hierbei besteht darin, dass das Füllmittel im wesentlichen drucklos eingebracht wird und sich aufgrund seiner eigenen Fließfähigkeit in der gewünschten Weise verteilt.

Das Füllmittel wird erfindungsgemäß derart eingebracht, dass der Träger mit Ausnahme der Auflageflächen in das Füllmittel eingebettet ist. Damit sind insbesondere die teilflächigen Bereiche vollständig von Füllmaterial umschlossen.

Auch bei den beschriebenen Verfahren kann vor Herstellung der Verbindung beziehungsweise des Trägers ein Haftvermittler aufgebracht werden. Ein weiterer Gegenstand der Erfindung ist ein Verlegesystem zur Erstellung eines Bodenbelags aus den vorbeschriebenen Verbundplatten, sowie ein aus diesen Verbundplatten gebildeter Bodenbelag und ein einen derartigen Bodenbelag aufweisendes Gebäude.

### Kurzbeschreibung der Zeichnung

In der Zeichnung sind Ausführungsbeispiele der Erfindung dargestellt. Es zeigt die:
- Fig. 1: einen Querschnitt durch eine mit einem Träger verbundene Platte gemäß der ersten Erfindung, die
- Fig. 2: eine perspektivische Ansicht eines Teils der Verbundplatte aus Fig. 1, die
- Fig. 3: eine mit Träger versehene Platte, die
- Fig. 4: eine Detailansicht bei Verwendung eines Haftvermittlers, die
- Fig. 5: den Teil einer Vorrichtung zur Herstellung eines mit einer Platte verbundenen Trägers nach Fig. 3 in einem formgebenden Prozeß, die
- Fig. 6: eine einzelne fertige Verbundplatte, die
- Fig. 6a: einen Schnitt im Randbereich entlang der Linie AA aus Fig. 6 und die
- Fig. 6b: einen Schnitt im Randbereich entlang der Linie BB aus Fig. 6.

### Ausführungsbeispiele

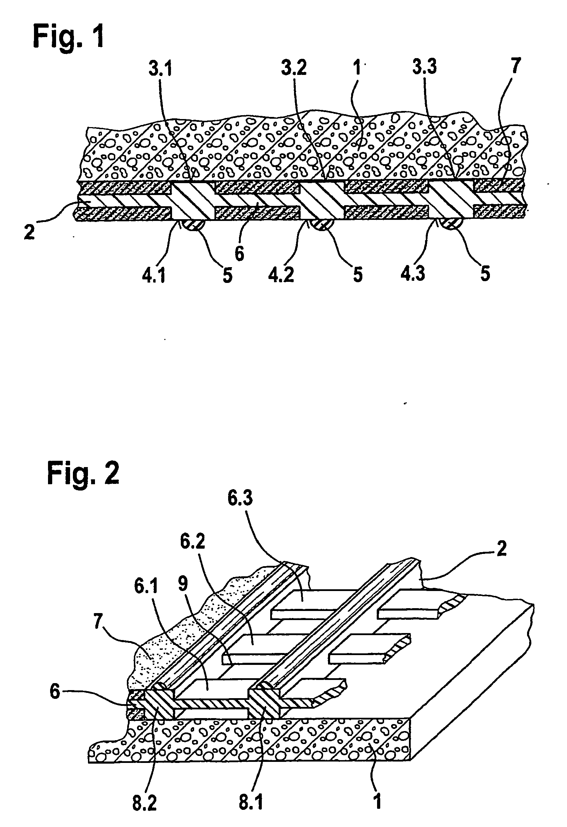

Die in Fig. 1 dargestellte Platte 1 besteht aus einem Werkstoff, der für die Herstellung eines Bodenbelags Verwendung findet, also insbesondere aus Naturstein oder aus Keramik in Form einer Fliese. Derartige Werkstoffe weisen nur minimale Elastizitäten auf und werden zur Verbindung mit anderen Platten daher auf einen Träger 2 montiert.

Der Träger 2 weist hierzu mehrere Anlageflächen 3 (3.1 bis 3.3) auf, auf welchen die Verlegeseite der Platte 1 aufliegt.

Der Träger 2 weist auf seiner den Anlageflächen 3 abgewandten Seite Auflageflächen 4 (4.1 bis 4.3) auf, welche auf die zu bedeckende Oberfläche aufgelegt werden. Dabei ist eine Dämpfungsauflage 5 vorgesehen.

Der Träger weist weiterhin teilflächige Bereiche 6 auf, die zur Verlegeseite der Platte 1 beabstandet sind und hier in Form von Verbindungsstegen zwischen den die Anlageflächen 3 und die Auflageflächen 4 tragenden Bereichen 8 ausgebildet sind. Die teilflächigen Bereiche 6 sind auch zu den Auflageflächen 4 beabstandet.

Die Verbindung zwischen der Platte 1 und dem Träger 2 erfolgt durch ein Füllmittel 7, welches in den Zwischenraum zwischen den teilflächigen Bereichen 6 und der Verlegeseite der Platte 1 eingebracht ist und welches mit der Verlegeseite der Platte 1 verbunden ist. Hierbei wird gegebenenfalls ein Haftvermittler verwendet, um beispielsweise ein Verkleben zu ermöglichen.

Das Füllmittel 7 umschließt den teilflächigen Bereich 6 vollständig, das heißt sowohl den Zwischenraum zur Verlegeseite hin als auch den offenen Raum zur späteren, zu bedeckenden Oberfläche hin. Dabei ist das Füllmittel 7 so aufgebracht, dass die Auflageflächen 4 stets über das Füllmittel herausragen beziehungsweise zumindest bündig mit diesem sind.

In Fig. 2 wird dieser Aufbau näher erläutert. Ausgehend von der Platte 1 ist der Träger 2 aufgelegt, wobei der Träger 2 Rippen 8 (8.1, 8.2) aufweist, die durch Verbindungsstege 6 (6.1 bis 6.3) als teilflächige Bereiche verbunden sind. Zwischen diesen teilflächigen Bereichen 6.1 bis 6.3 sind Zwischenräume 9 vorgesehen, durch welche von der Oberseite her eingefülltes Füllmittel 7 bis zur Platte 1 gelangen kann. Im linken Bereich der Fig. 2 ist der Träger 2 bereits mit Füllmittel 7 so bedeckt, dass die Rippen 8.2 mit ihren Auflageflächen noch überstehen und der Verbindungssteg 6 vollständig vom Füllmittel 7 eingeschlossen ist.

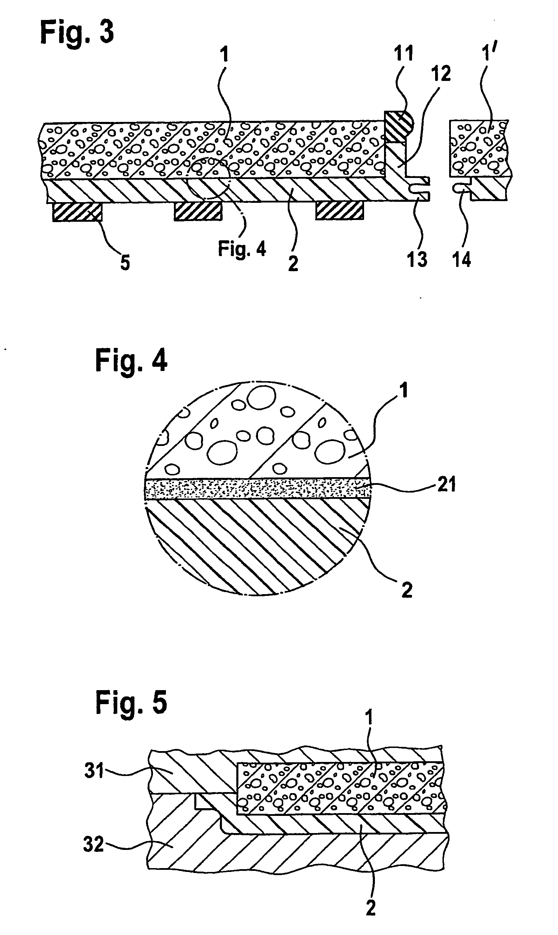

In Fig. 3 ist ein anderes Beispiel gezeigt. Zu erkennen ist eine Platte 1, auf welcher ein Träger 2 in einem an sich bekannten formgebenden Prozeß des Trägers selbst angebracht wurde. Der Träger ist mit einer Dämpfungsauflage 5 zur Trittschalldämmung versehen, die in einem zweiten Schritt des formgebenden Verfahrens hergestellt werden kann, ebenso wie eine Dichtung 11, die sich auf einem Vorsprung 12 an einer Stirnseite der Platte 1 befindet.

Der Träger 2 ist darüber hinaus mit einem vorspringenden Verbindungsmittel 13 versehen, welches mit einem unterhalb einer benachbarten Platte 1' angeordneten, zurückspringenden Verbindungsmittel 14 zusammenwirkt.

In Fig. 4 ist ein Teilausschnitt aus Fig. 3 gezeigt, um die Verwendung eines Haftvermittlers 21 zwischen der Platte 1 und dem Träger 2 zu verdeutlichen. Dieser Haftvermittler kann selbstverständlich auch in dem Ausführungsbeispiel gemäß Fig. 1, 2 zwischen dem Füllmittel 7 und der Platte 1 vorgesehen sein.

In Fig. 5 ist schematisch dargestellt, wie die Platte 1 in einem zweiteiligen Werkzeug 31, 32 gehalten ist, um den Träger 2 in einem formgebenden Verfahren mit der Platte 1 zu verbinden.

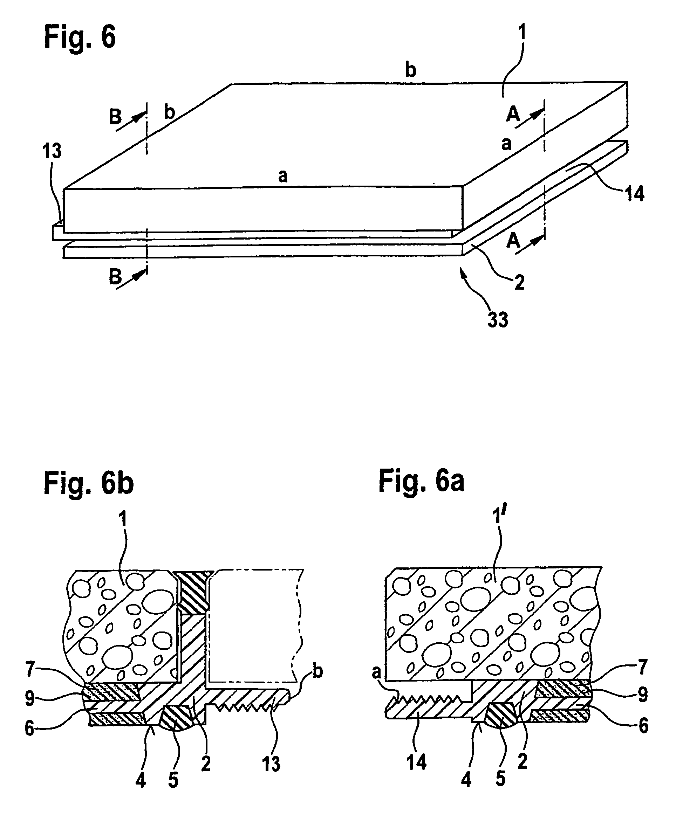

In Fig. 6 ist eine Verbundplatte in einer perspektivischen Ansicht gezeigt, wie sie in Teilansichten auch in den Fig. 1, 2 und 3 dargestellt ist. Unter der Platte 1 ist der Träger 2 angeordnet und im Randbereich des Trägers 2 sind Verbindungsmittel 13,14 zur benachbarten Verbundplatte vorgesehen. Diese Verbindungsmittel sind beispielsweise in der WO 03 040491 A1 beschrieben, auf die ausdrücklich Bezug genommen wird. Der Randbereich des Trägers 2 ist in zwei jeweils aneinanderstoßende, gleich ausgebildete Abschnitte a, b unterteilt, wobei die Abschnitte a,b so ausgebildet sind, dass ein Abschnitt a mit einem Abschnitt b der benachbatren Platte zusammenwirkt.

In den Fig. 6a, 6b ist die Gestaltung des Trägers 2 im Randbereich a, b beschrieben. Die Platte 1, 1' liegt auf dem Träger 2 auf bzw. ist mit diesem verbunden. Der Träger 2 weist teilflächige Bereiche 6 auf, die als Stege ausgebildet sind und einen Zwischenraum 9 zur Platte hin begrenzen. Dieser Zwischenraum 9 ist mit Füllmittel 7 gefüllt, welches die Stege 6 umschließt. Darüber hinaus ist die Auflagefläche 4 mit einer Dämpfungsauflage 5 versehen. Das Verbindungsmittel 14 des Randbereichs a ist unter der Platte 1 angeordnet, das Verbindungsmittel 13 des Randbereichs b steht dagegen hervor.

### Bezugszeichenliste

- 1: Platte
- 2: Träger
- 3: Anlageflächen
- 3.1: Anlageflächen
- 3.2: Anlageflächen
- 3.3: Anlageflächen
- 4: Auflageflächen
- 4.1: Auflageflächen
- 4.2: Auflageflächen
- 4.3: Auflageflächen
- 5: Dämpfungsauflage
- 6: teilflächige Bereiche
- 7: Füllmittel
- 8: Rippen
- 8.1: Rippen
- 8.2: Rippen
- 9: Zwischenräume
- 11: Dichtung
- 12: Vorsprung
- 13: Verbindungsmittel
- 14: Verbindungsmittel
- 21: Haftvermittler
- 31: Werkzeug
- 32: Werkzeug
- 33: Verbundplatte

## Patentansprüche

1. Verbundplatte zur Verwendung in einem Verlegesystem, insbesondere zur Herstellung eines Bodenbelags, aufweisend einen an der Verlegeseite angeordneten Träger (2), wobei der Träger (2) Anlageflächen (3) an die Verlegeseite der Platte (1) aufweist und wobei der Träger (2) teilflächige Bereiche (6) aufweist, die zu der Verlegeseite der Platte (1) hin beabstandet sind, wobei der Zwischenraum zwischen den Bereichen (6) und der Verlegeseite der Platte (1) mit einem Füllmittel (7) ausgefüllt ist, **dadurch gekennzeichnet, dass** die Bereiche (6) in das Füllmittel (7) eingebettet sind.

2. Verbundplatte nach Anspruch 1, **dadurch gekennzeichnet, dass** der Träger (2) Auflageflächen (4) aufweist, die über die Bereiche (6) hervorstehen.

3. Verbundplatte nach einem der Ansprüche 1 oder 2, **dadurch gekennzeichnet, dass** das Füllmittel (7) an der Verlegeseite der Platte (1) haftet, insbesondere durch Adhäsion bzw. Kleben.

4. Verbundplatte nach einem der Ansprüche 1 bis 3, **dadurch gekennzeichnet, dass** sich das Füllmittel (7) höchstens bis zu den Auflageflächen (4) hin erstreckt.

5. Verbundplatte nach einem der Ansprüche 2 bis 4, **dadurch gekennzeichnet, dass** die Auflageflächen (4) mit einer Dämpfungsauflage (5) für Trittschall versehen sind.

6. Verbundplatte nach einem der Ansprüche 1 bis 5, **dadurch gekennzeichnet, dass** zwischen dem Füllmittel (7) und der Verlegeseite der Platte (1) ein Haftvermittler (21) vorhanden ist.

7. Verbundplatte nach einem der Ansprüche 1 bis 6, **dadurch gekennzeichnet, dass** der Träger (2) als Gitter ausgebildet ist.

8. Verbundplatte nach einem der Ansprüche 1 bis 7, **dadurch gekennzeichnet, dass** das Füllmittel (7) ein Polymer wie Kunstharz, PU-Schaum ist.

9. Verbundplatte nach einem der Ansprüche 1 bis 8, **dadurch gekennzeichnet, dass** der Träger (2) zumindest teilweise über die Platte (1) hervorstehende Verbindungsmittel (13) einerseits und zumindest teilweise unter der Platte angeordnete Verbindungsmittel (14) andererseits aufweist.

10. Verbundplatte nach einem der Ansprüche 1 bis 9, **dadurch gekennzeichnet, dass** der Träger an mindestens einer Seitenkante der Platte (1) zur Oberseite der Platte hin vorspringt, wobei dieser Vorsprung (12) mit einer Dichtung (11) versehen ist.

11. Verbundplatte nach Anspruch 10, **dadurch gekennzeichnet, dass** die Dichtung (11) in einem formgebenden Verfahren mit dem Träger (2) verbunden ist.

12. Verfahren zur Herstellung einer Verbundplatte nach einem der Ansprüche 1 bis 11, **dadurch gekennzeichnet, dass** ein Träger (2) über Anlageflächen (3) zur Platte (1) ausgerichtet wird und dass Füllmittel (7) zwischen die Anlageflächen (3) des Trägers (2) und die Platte (1) eingebracht wird, wobei sich das Füllmittel (7) mit der Platte (1) einerseits und mit teilflächigen Bereichen (6) des Trägers (2) andererseits verbindet, wobei das Füllmittel (7) so eingebracht wird, dass der Träger (2) mit Ausnahme von Auflageflächen (4) in das Füllmittel (7) eingebettet ist.

13. Verlegesystem zur Erstellung eines Bodenbelages bestehend aus Verbundplatten (1) nach einem der Ansprüche 1 bis 11.

14. Bodenbelag, gebildet aus einer oder mehreren der Verbundplatten (1) gemäß einem der Ansprüche 1 bis 11.

15. Gebäude, aufweisend einen aus einer oder mehreren der Verbundplatten (1) gemäß einem der Ansprüche 1 bis 11 gebildeten Bodenbelag.

## Claims

1. A composite panel for use in a laying system, in particular for creating a floor covering, comprising a support (2) arranged on the laying side, wherein the support (2) comprises contact surfaces (3) onto the laying side of the panel (1) and wherein the support (2) comprises part-plane regions (6) which are distanced to the laying side of the panel (1), wherein the intermediate space between the regions (6) and the laying side of the panel (1) is filled out with a filler (7), **characterised in that** the regions (6) are embedded into the filler (7).

2. A composite panel according to claim 1, **characterised in that** the support (2) comprises contact surfaces (4) which project beyond the regions (6).

3. A composite panel according to one of the claims 1 or 2, **characterised in that** the filler (7) sticks on the laying side of the panel (1), in particular by way of adhesion or bonding.

4. A composite panel according to one of the claims 1 to 3, **characterised in that** the filler (7) at the most extends up to the contact surfaces (4).

5. A composite panel according to one of the claims 2 to 4, **characterised in that** the contact surfaces (4) are provided with a damping layer (5) for footfall sound.

6. A composite panel according to one of the claims 1 to 5, **characterised in that** a bonding agent (21) is present between the filler (7) and the laying side of the panel (1).

7. A composite panel according to one of the claims 1 to 6, **characterised in that** the support (2) is designed as a grid.

8. A composite panel according to one of the claims 1 to 7, **characterised in that** the filler (7) is a polymer such as artificial resin, PU foam.

9. A composite panel according to one of the claims 1 to 8, **characterised in that** the support (2) on the one hand comprises connection means (13) projecting at least partly beyond the panel (1) and on the other hand connection means (14) arranged at least partly below the panel.

10. A composite panel according to one of the claims 1 to 9, **characterised in that** the support on at least one side edge of the panel (1) projects to the upper side of the panel, wherein this projection (12) is provided with a seal (11).

11. A composite panel according to claim 10, **characterised in that** the seal (11) is connected to the support (2) in a forming method.

12. A method for manufacturing a composite panel according to one of the claims 1 to 11, **characterised in that** a support (2) is aligned to the panel (1) via contact surfaces (3) and that filler (7) is incorporated between the contact surfaces (3) of the support (2) and the panel (1), wherein the filler (7) on the one hand connects to the panel (1) and on the other hand to part-plane regions (6) of the support (2), wherein the filler (7) is incorporated such that the support (2) with the exception of contact surfaces (4) is embedded into the filler (7).

13. A laying system for creating a floor covering consisting of composite panels (1) according to one of the claims 1 to 11.

14. A floor covering of one or more of the composite panels (1) according to one of the claims 1 to 11.

15. A building comprising a floor covering which is formed from one or more of the composite panels (1) according to one of the claims 1 to 11.

## Revendications

1. Plaque composite destinée à être utilisée dans un système de pose, en particulier pour réaliser un recouvrement de sol, et présentant un support (2) disposé sur le côté de pose,
le support (2) présentant des surfaces de pose (3) sur le côté de pose de la plaque (1),
le support (2) présentant des parties partiellement plates (6) qui sont maintenues à distance du côté de pose de la plaque (1),
l'espace intermédiaire entre les parties (6) et le côté de pose de la plaque (1) étant rempli d'une charge (7),
**caractérisée en ce que**
les parties (6) sont ancrées dans la charge (7).

2. Plaque composite selon la revendication 1, **caractérisée en ce que** le support (2) présente des surfaces de pose (4) qui débordent au-delà des parties (6).

3. Plaque composite selon l'une des revendications 1 ou 2, **caractérisée en ce que** la charge (7) adhère au côté de pose de la plaque (1), en particulier par adhérence ou collage.

4. Plaque composite selon l'une des revendications 1 à 3, **caractérisée en ce que** la charge (7) s'étend au plus jusqu'aux surfaces de pose (4).

5. Plaque composite selon l'une des revendications 2 à 4, **caractérisée en ce que** les surfaces de pose (4) sont dotées d'une couche (5) d'amortissement des bruits de pas.

6. Plaque composite selon l'une des revendications 1 à 5, **caractérisée en ce qu'**un agent (21) de renforcement de l'adhérence est prévu entre la charge (7) et le côté de pose de la plaque (1).

7. Plaque composite selon l'une des revendications 1 à 6, **caractérisée en ce que** le support (2) est configuré comme grille.

8. Plaque composite selon l'une des revendications 1 à 7, **caractérisée en ce que** la charge (7) est un polymère, par exemple une résine synthétique ou une mousse de PU.

9. Plaque composite selon l'une des revendications 1 à 8, **caractérisée en ce que** le support (2) présente d'une part des moyens de liaison (13) qui débordent au moins en partie de la plaque (1) et d'autre part des moyens de liaison (14) disposés au moins en partie en dessous de la plaque.

10. Plaque composite selon l'une des revendications 1 à 9, **caractérisée en ce que** le support déborde en direction du côté supérieur de la plaque en au moins un bord latéral de la plaque (1), ce débord (12) étant doté d'un joint d'étanchéité (11).

11. Plaque composite selon la revendication 10, **caractérisée en ce que** le joint d'étanchéité (11) est relié au support (2) par un procédé de façonnage.

12. Procédé de fabrication d'une plaque composite selon l'une des revendications 1 à 11, **caractérisé en ce qu'**un support (2) est aligné sur la plaque (1) par l'intermédiaire de surfaces de pose (3) et **en ce qu'**une charge (7) est apportée entre les surfaces de pose (3) du support (2) et la plaque (1), la charge (7) se liant d'une part à la plaque (1) et d'autre part à certaines parties partiellement plates (6) du support (2), la charge (7) étant apportée de telle sorte que le support (2) soit ancré dans la charge (7) à l'exception des surfaces de pose (4).

13. Système de pose en vue de la réalisation d'un recouvrement de sol, constitué de plaques composites (1) selon l'une des revendications 1 à 11.

14. Recouvrement de sol formé d'une ou plusieurs des plaques composites (1) selon l'une des revendications 1 à 11.

15. Bâtiment présentant un recouvrement de sol formé d'une ou plusieurs des plaques composites (1) selon l'une des revendications 1 à 11.
